# EUROPEAN PATENT APPLICATION

(11) **EP 4 790 765 A1**
(43) Date of publication of application: **12.08.2026**
(21) Application number: 26154672.5
(22) Date of filing: 28.01.2026
(51) Int. Cl.: H01M 4/36, H01M 4/525, C01G 53/00, H01M 4/1391, H01M 10/052, H01M 10/0562

(54) **COMPOSITE POSITIVE ELECTRODE ACTIVE MATERIAL PARTICLES, METHOD OF MANUFACTURING COMPOSITE POSITIVE ELECTRODE ACTIVE MATERIAL PARTICLES, AND SOLID-STATE BATTERY**

(30) Priority: 05.02.2025 JP 2025017936
(71) Applicant: Toyota Jidosha Kabushiki Kaisha, Toyota-shi, Aichi-ken 471-8571 (JP)
(72) Inventor: KUBOTA, Masaru, Toyota-shi, Aichi-ken, 471-8571 (JP)
(74) Representative: Winter, Brandl - Partnerschaft mbB

(57) **Abstract**

Composite positive electrode active material particles, a method of manufacturing composite positive electrode active material particles, and a solid-state battery. The composite positive electrode active material particles contain: positive electrode active material particles; a first coating layer coating at least a part of the positive electrode active material particles; and a second coating layer coating at least a part of the first coating layer, wherein the first coating layer contains an oxide, the second coating layer contains a sulfide solid electrolyte, the sulfide solid electrolyte contains an argyrodite-type sulfide, and a 10% particle diameter D10 in a volume-based cumulative particle size distribution is 3.3 µm or less.

## Description

### BACKGROUND

### Technical Field

The present disclosure relates to composite positive electrode active material particles, a method of manufacturing composite positive electrode active material particles, and a solid-state battery.

### Related Art

The demand for secondary batteries has been increasing in recent years, and, in addition to secondary batteries that have an electrolyte liquid, the development of solid-state batteries that use a solid electrolyte has advanced. An all-solid-state battery that is an example of a solid-state battery is a battery having a solid electrolyte layer instead of an electrolyte liquid. Because all-solid-state batteries do not use flammable organic solvents, simplification of the safety devices is devised, and such batteries have excellent manufacturing cost and mass producibility.

As positive electrode active material particles that can reduce resistance even in cases in which the restraining force of the battery is small or the blended amount of the positive electrode active material particles is high, there are known positive electrode composite active material particles in which at least portions of surfaces of positive electrode active material particles formed from a lithium-containing oxide are coated by a coating material containing a sulfide solid electrolyte (Japanese Patent Application Laid-Open (JP-A) No. 2021-163580). This coating material is a glass ceramic.

### SUMMARY

There are cases in which the resistance increase rate of a solid-state battery, which uses positive electrode active material particles coated by a glass ceramic in the positive electrode, becomes high accompanying usage of the battery.

A topic that embodiments of the present disclosure address is the provision of composite positive electrode active material particles, a method of manufacturing composite positive electrode active material particles, and a solid-state battery that can suppress the resistance increase rate of a battery.

Aspects addressing this topic are described below.

A first aspect of the present disclosure provides composite positive electrode active material particles containing: positive electrode active material particles; a first coating layer coating at least a part of the positive electrode active material particles; and a second coating layer coating at least a part of the first coating layer, wherein the first coating layer contains an oxide, the second coating layer contains a sulfide solid electrolyte, the sulfide solid electrolyte contains an argyrodite-type sulfide, and a 10% particle diameter D10 in a volume-based cumulative particle size distribution is 3.3 µm or less.

A second aspect of the present disclosure provides the composite positive electrode active material particles of the first aspect, wherein the positive electrode active material particles contain Ni in a proportion of 80 mol% or more.

A third aspect of the present disclosure provides the composite positive electrode active material particles of the first aspect or the second aspect, wherein the first coating layer is configured by an oxide.

A fourth aspect of the present disclosure provides the composite positive electrode active material particles of any one of the first aspect through the third aspect, wherein the first coating layer is configured by a phosphorus oxide.

A fifth aspect of the present disclosure provides the composite positive electrode active material particles of any one of the first aspect through the fourth aspect, wherein the 10% particle diameter D10 in a volume-based cumulative particle size distribution is 2.5 µm or less.

A sixth aspect of the present disclosure provides the composite positive electrode active material particles of any one of the first aspect through the fifth aspect, wherein the 10% particle diameter D10 in a volume-based cumulative particle size distribution is 1.9 µm or more.

A seventh aspect of the present disclosure provides a method of manufacturing the composite positive electrode active material particles of any one of the first aspect through the sixth aspect, the method including: a step of forming the positive electrode active material particles on which the first coating layer is coated by spraying and drying a blended liquid that contains the positive electrode active material particles and a solution containing an element that configures the first coating layer; and a step of forming the positive electrode active material particles on which the second coating layer is further coated by blending together the positive electrode active material particles, on which the first coating layer has been coated, and a dispersion liquid, which contains the argyrodite-type sulfide, using a kneading device.

An eighth aspect of the present disclosure provides the solid-state battery including: a positive electrode containing the composite positive electrode active material particles of any one of the first aspect through the sixth aspect; a negative electrode; and a sulfide solid electrolyte.

A ninth aspect of the present disclosure provides the solid-state battery of the eighth aspect, wherein the sulfide solid electrolyte contains an argyrodite-type sulfide.

In accordance with embodiments of the present disclosure, there are provided composite positive electrode active material particles, a method of manufacturing composite positive electrode active material particles, and a solid-state battery that can suppress the resistance increase rate of a battery.

### BRIEF DESCRIPTION OF THE DRAWINGS

Fig. 1 is a cross-sectional view of a composite positive electrode active material particle, and schematically illustrates the composite positive electrode active material particle structure; and
Fig. 2 is a cross-sectional view schematically illustrating an example of an electrode layered structure.

### DETAILED DESCRIPTION

In the present disclosure, numerical value ranges expressed by using "-" mean ranges in which the numerical values listed before and after the "-" are included as the minimum value and maximum value, respectively.
In numerical value ranges that are expressed in a stepwise manner in the present disclosure, the maximum value or the minimum value listed in a given numerical value range may be substituted by the maximum value or the minimum value of another numerical value range that is expressed in a stepwise manner. In the numerical value ranges put forth in the present disclosure, the maximum value or the minimum value listed in a given numerical value range may be substituted by a value set forth in the Examples.
In the present disclosure, "step" is not only an independent step and includes steps that, even in a case in which that step cannot be clearly distinguished from another step, achieve the intended object of that step.
In the present disclosure, combinations of two or more preferable aspects are more preferable aspects.
In the present disclosure, in a case in which there are plural types of materials that correspond to a component, the amount of that component means the total amount of the plural types of materials, unless otherwise specified.
In the present disclosure, when an embodiment is described with reference to the drawings, the structure of the embodiment is not limited to the structure illustrated in the drawings. Further, the sizes of members in the respective drawings are schematic, and the relative relationships of the sizes of the members are not limited to these.

In the present embodiment, "10% particle diameter D10" means the average particle diameter corresponding to a cumulative frequency of 10% from the small diameter side in a volume-based cumulative particle size distribution, and "50% particle diameter D50" means the average particle diameter corresponding to a cumulative frequency of 50% from the small diameter side in the volume-based cumulative particle size distribution. For example, if D10 is 5 µm in the volume-based distribution, this means that the volume of all of the particles that are less than 5 µm is 10% of the entirety.
In the present disclosure, the particle diameter in the volume-based cumulative particle size distribution is a value measured by a laser diffraction/scattering method.

### <Composite Positive Electrode Active Material Particles>

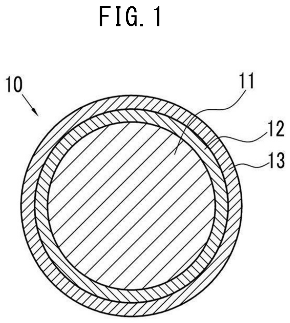

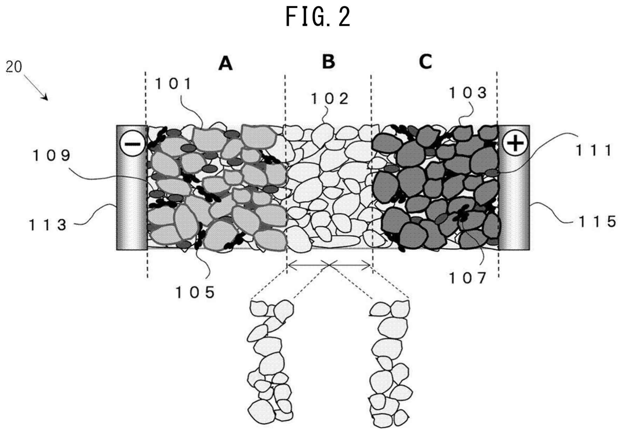

The composite positive electrode active material particles that are an embodiment of the present disclosure are described hereinafter by using Fig. 1 and Fig. 2.
The composite positive electrode active material particles that are an embodiment of the present disclosure contain positive electrode active material particles, a first coating layer that coats at least some of the positive electrode active material particles, and a second coating layer that coats at least some of the first coating layer, and the 10% particle diameter D10 in the volume-based cumulative particle size distribution (hereinafter also called particle diameter D10) is 3.3 µm or less. The first coating layer contains an oxide. The second coating layer contains a sulfide solid electrolyte, and the sulfide solid electrolyte contains an argyrodite-type sulfide.

Secondary batteries include secondary batteries that have an electrolyte liquid and solid-state batteries that have a solid electrolyte. Solid-state batteries include all-solid-state batteries using a solid electrolyte as the electrolyte, and semi-solid-state batteries having, between an electrode and a solid electrolyte, a gel layer containing an electrolyte liquid and a polymer. A solid electrolyte may contain an electrolyte liquid in an amount of less than 10 mass% with respect to the entire amount of the electrolyte. Note that the solid electrolyte may be a composite solid electrolyte containing an inorganic solid electrolyte and a polymer electrolyte. In the present disclosure, an all-solid-state battery is preferable as the solid-state battery.
The solid-state battery is preferably a high-capacity battery, depending on the application thereof. For example, in a case in which a secondary battery for a vehicle is a high-capacity battery, a longer distance can be traveled on a single charge. Therefore, the convenience improves, the frequency of charging decreases due to the ensuring of a long traveling distance, and the burden on the user is reduced.

In order to increase the capacity of a solid-state battery, for example, from the standpoints of the electron transfer capability and the Li accommodation capability, it is conceivable to use positive electrode active material particles whose element ratio of Ni is high. However, if positive electrode active material particles whose element ratio of Ni is high are used in a solid-state battery having a sulfide solid electrolyte, the volume changes of the active material particles that accompany charging/discharging are relatively large, and there are cases in which the resistance increase rate becomes high. Suppressing the resistance increase rate relates also to lengthening the lifespan of the battery. Further, being able to suppress the resistance increase rate in the low SOC (State of Charge) region is particularly preferable for secondary batteries for vehicles, secondary batteries for backup, and the like that are thought to work in the low SOC region.

The present inventors studied suppressing an increase in the resistance increase rate even when using, for example, a positive electrode active material whose element ratio of Ni is high, and focused on the structure of positive electrode active material particles. Then, the present inventors discovered that the resistance increase rate is suppressed in batteries using composite positive electrode active material particles that have a specific first coating layer and second coating layer and whose particle diameter D10 in a volume-based cumulative particle size distribution is a specific value.

Although the mechanism by which the above-described effect is exhibited is not clear, it is surmised that this is because composite positive electrode active material particles, which have a specific first coating layer and second coating layer and whose particle diameter D10 is a specific value, have chemical stability by which the formation of high-resistance layers at the interfaces between the positive electrode active material and the solid electrolyte is suppressed, and have mechanical stability by which the interfaces between the positive electrode active material and the solid electrolyte are strong and are difficult to disappear.

As illustrated in Fig. 1, a composite positive electrode active material particle 10 includes a first coating layer 12 that coats a positive electrode active material particle 11 that is a core particle, and a second coating layer 13 that coats the first coating layer 12. The composite positive electrode active material particles 10 are various sizes and shapes, but the composite positive electrode active material particles 10 on the whole have a particle size distribution. Note that "particles" include cases meaning individual particles and cases meaning the particles on the whole. Further, although Fig. 1 illustrates a form in which the positive electrode active material particle 11 and the first coating layer 12 respectively are coated over the entire surfaces thereof, the entire surfaces do not have to be coated, and there may be a form in which portions of the positive electrode active material particle 11 and the first coating layer 12 respectively are coated.

### (Positive Electrode Active Material Particles)

The positive electrode active material particles are various sizes and shapes, and may be secondary particles in which primary particles are collected together. The positive electrode active material particles on the whole have a particle size distribution. In order for the particle diameter D10 of the composite positive electrode active material particles to be within a specific range, it is preferable to use particles of relatively small particle diameters as the positive electrode active material particles. The 50% particle diameter D50 (also called particle diameter D50 hereinafter) in the volume-based cumulative particle size distribution of the positive electrode active material particles is preferably 1.0 µm - 20.0 µm, and more preferably 2.0 µm - 6.0 µm, and more preferably 3.0 µm - 5.0 µm.

In the composite positive electrode active material particles, the 50% particle diameter D50 in the volume-based cumulative particle size distribution is a value measured by a laser diffraction/scattering method. The particle diameter measured by a laser diffraction/scattering method can be measured by using a corresponding particle diameter distribution measuring device.

In the present disclosure, the laser diffraction/scattering method is a method of, by using the SALD-7500nano manufactured by Shimadzu Corporation, collecting 1.0 g of the composite positive electrode active material particles and 3.0 g of 1,2,3,4-tetrahydronaphthalene as a solvent in a PP container, and, by using an ultrasonic homogenizer (UH-50 manufactured by SMT Co., Ltd., with the set level of the output being 9 and in the constant mode), blending/stirring for 60 seconds so as to disperse the particles in the solvent, and, after weighing-out in a batch cell, measuring the particle size distribution. At the time of measurement, the settings of the refractive index are a real number part of 1.40 and an imaginary number part of 0.02i.

It is preferable that a lithium composite oxide be contained in the composition of the positive electrode active material particles. The lithium composite oxide may contain at least one type selected from the group consisting of F, Cl, N, S, Br and I. Further, the lithium composite oxide may have a crystal structure belonging to at least one space group selected from space groups R-3m, Immm, and P63-mmc (also called P63mc, P6/mmc). In the lithium composite oxide, the main sequence of a transition metal, oxygen and lithium may be an O2-type structure.

Examples of lithium composite oxides having a crystal structure belonging to R-3m are compounds expressed by LiₓMe_{y}O_{α}X_{β} (Me represents at least one type selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si and P, and X represents at least one type selected from the group consisting of F, Cl, N, S, Br and I, and 0.5≤x≤1.5, 0.5≤y≤1.0, 1≤α<2, and 0<β≤1 are satisfied).

Examples of lithium composite oxides having a crystal structure belonging to Immm are composite oxides expressed by Liₓ₁M¹A¹₂ (1.5≤x1≤2.3is satisfied, M¹ includes at least one type selected from the group consisting of Ni, Co, Mn, Cu and Fe, A¹ includes at least oxygen, and the ratio of the oxygen contained in A¹ is greater than or equal to 85 atom%) (a specific example is Li₂NiO₂), and composite oxides expressed by LiₓM^{1A}₁₋ₓ₂M^{1B}_{X2}O_{2-y}A²_{y} (0≤x2≤0.5, 0≤y≤0.3, at least one of x2 and y is not 0, M^{1A} represents at least one type selected from the group consisting of Ni, Co, Mn, Cu and Fe, M^{1B} represents at least one type selected from the group consisting of Al, Mg, Sc, Ti, Cr, V, Zn, Ga, Zr, Mo, Nb, Ta and W, and A² represents at least one type selected from the group consisting of F, Cl, Br, S and P).

Examples of lithium composite oxides having a crystal structure belonging to P63-mmc are composite oxides expressed by M1ₓM2_{y}O₂ (M1 represents an alkali metal (at least one of Na and K is preferable), M2 represents a transition metal (at least one type selected from the group consisting of Mn, Ni, Co and Fe is preferable), and x+y satisfies 0<x+y≤2).

Examples of lithium composite oxides having an O2-type structure are composite oxides expressed by Liₓ[Li_{α}(Mn_{α}Co_{b}M_{c})_{1-α}]O₂ (0.5<x<1.1, 0.1<α<0.33, 0.17<a<0.93, 0.03<b<0.50, 0.04<c<0.33, and M represents at least one type selected from the group consisting of Ni, Mg, Ti, Fe, Sn, Zr, Nb, Mo, W and Bi). A specific example is Li_{0.744}[Li_{0.145}Mn_{0.625}Co_{0.115}Ni_{0.15}]O₂.

The positive electrode active material particles preferably contain Ni in a proportion of 80 mol% or more. By using positive electrode active material particles having a high element ratio of Ni, the battery performances such as a high capacity improve, the resistance increase rate is relatively low, and the battery can be made to have a long life. Examples of positive electrode active materials having a high element ratio of Ni are NMC811 (LiNi_{0.8}Mn_{0.1}Co_{0.1}O₂), NMC 90/5/5 (LiNi_{0.9}Mn_{0.05}Co_{0.05}O₂), and NCA (LiNi_{0.83}Co_{0.13}Al_{0.04}O₂). Further, materials in which these are doped with element Zr, element F, element Ti or the like may be used.

### (First Coating Layer)

The first coating layer has the functions of directly coating the positive electrode active material particle and preventing a reaction with the sulfide contained in the solid electrolyte. The first coating layer coats at least a portion of the surface of the positive electrode active material particle, and preferably coats the surface of the positive electrode active material particle as much as possible, and more preferably coats the entire surface of the positive electrode active material particle. The coating ratio measured by X-ray photoelectron spectroscopy may be 83% or more for example. By making the coating ratio be 83% or more, a reduction in the initial resistance is anticipated.

The composition of the first coating layer is preferably uniform, and the first coating layer is preferably a relatively thin film. The first coating layer may be a thickness of 5 nm - 100 nm for example. The thickness at which the first coating layer coats the surface of the positive electrode active material particle is determined by observing a sectional SEM image and taking the average value of the thicknesses measured at arbitrary 200 points (20 points of each of 10 particles).

The first coating layer preferably consists of an oxide. By structuring the first coating layer from an oxide, high resistance layers forming at the interfaces between the positive electrode active material and the solid electrolyte can be suppressed, which relates to suppression of the resistance increase rate.

Provided that the oxide that the first coating layer contains has the function of preventing a reaction with the sulfide contained in the solid electrolyte, a conventionally known oxide can be used therefor. For example, niobium oxides such as LiNbO₃, and phosphorus oxides can be used as the oxide. The first coating layer preferably consists of a phosphorus oxide. This is because phosphorus oxides are stable at high potentials, and therefore, it is difficult for them to deteriorate the sulfide solid electrolyte contained in the second coating layer.

The method of forming the first coating layer is not particularly limited. Examples are a method of preparing a processing liquid containing a precursor of the first coating layer, and preparing a blended liquid such as a slurry in which positive electrode active material particles are dispersed in the processing liquid, and baking the blended liquid or spray drying the blended liquid by using a spray dryer, a method using a roll flow coater, the method described in JP-A No. 2022-047501, and the methods described in JP-A No. 2023-122200 and JP-A No. 2023-137657. Thereamong, a spray drying method is preferable because the composition of the first coating layer is uniform, and a relatively thin film can be formed on the entire surface of the positive electrode active material particle.

### (Second Coating Layer)

The second coating layer coats at least a portion of the first coating layer. The second coating layer contains a sulfide solid electrolyte. The sulfide solid electrolyte contains an argyrodite-type sulfide. The second coating layer may contain a particle-shaped argyrodite-type sulfide. Due to the second coating layer being formed from a sulfide solid electrolyte that contains an argyrodite-type sulfide, it is difficult for high-resistance layers to form at the interfaces between the positive electrode active material particle and the solid electrolyte, and interfaces having high chemical stability are formed. Accordingly, by using a positive electrode active material whose element ratio of Ni is high, the resistance increase rate can be suppressed even in a case in which the volume changes that accompany charging/discharging are great.

The second coating layer preferably coats the entire surface of the first coating layer. The second coating layer may have a portion that coats the surface of the positive electrode active material particle. The second coating layer may form the outermost layer of the composite positive electrode active material particle. It is preferable that the second coating layer be a layer of a uniform film thickness. The second coating layer may be a thickness of 5 nm - 3000 nm for example. The extent, such as the thickness or the range, at which the second coating layer coats the surface of the positive electrode active material particle or the first coating layer is determined by observing a sectional SEM image and taking the average value of the thicknesses measured at arbitrary 200 points (20 points of each of 10 particles).

With regard to the composition of the argyrodite-type sulfide, the argyrodite-type sulfide preferably contains sulfur (S) as the main component that is an anion element, and preferably further contains, in addition to S, for example, the element Li, element A, and the element S. Element A is at least one selected from the group consisting of P, As, Sb, Si, Ge, Sn, B, Al, Ga and In. The sulfide solid electrolyte may further contain at least one of O and a halogen element. Examples of the halogen element (X) are F, Cl, Br, I. The composition of the sulfide solid electrolyte is not particularly limited, and examples thereof are xLi₂S•(100-x)P₂S₅ (70≤x≤80) and yLiI•zLiBr• (100-y-z)(xLi₂S• (1-x)P₂S₅) (0.7≤x≤0.8, 0≤y≤30, 0≤z≤30). The sulfide solid electrolyte may have the composition expressed by following general formula (1).

Li₄₋ₓGe₁₋ₓPₓS₄ (0<x<1) formula (1)

In formula (1), at least some of the Ge may be substituted by at least one selected from the group consisting of Sb, Si, Sn, B, Al, Ga, In, Ti, Zr, V and Nb. Further, at least some of the P may be substituted by at least one selected from the group consisting of Sb, Si, Sn, B, Al, Ga, In, Ti, Zr, V and Nb. Some of the Li may be substituted by at least one selected from the group consisting of Na, K, Mg, Ca and Zn. Some of the S may be substituted by a halogen. The halogen is at least one of F, Cl, Br and I. The argyrodite-type sulfide specifically has the composition Li₆PS₅X, and examples of the halogen element represented by X are Cl, Br and I.

Due to the argyrodite-type sulfide containing other elements that replace some of these elements, the argyrodite-type sulfide also contains compounds that impart characteristics. For example, another element such as Ge, Si, Sn may be contained in order to improve the electrochemical characteristics and stability. Further, the sulfide solid electrolyte that the second coating layer contains may have an argyrodite-type sulfide as the main component and other components compounded therein. Examples of other components are oxides, nitrides, carbides and fluorides. Further, the second coating layer may contain fragments of positive electrode active material particles, fragments of the first coating layer and the like that are generated during manufacturing.

The method of forming the second coating layer is not limited. An example is a method in which a dispersion liquid in which a sulfide solid electrolyte is dispersed is readied and is kneaded by a kneading device together with the positive electrode active material particles that have been provided with the first coating layer, and the solvent components are removed. Because the film thickness of the second coating layer can be made uniform by shearing force, it is preferable to form the second coating layer by a method of kneading in a moist state.

### (Particle Size Distribution of Composite Positive Electrode Active Material Particles)

The 10% particle diameter D10 in the volume-based cumulative particle size distribution of the composite positive electrode active material particles is 3.3 µm or less. By employing the particle diameter D10, and further, by having particle diameter D10 of a specific value or less, there are relatively many interfaces between the positive electrode active material particles and the solid electrolyte, and the expansion/contraction rate per reaction site is relatively small. Due thereto, it is easy for strong interfaces to be formed. Further, it is difficult for the formed solid electrolyte interfaces to disappear, and the interfaces have high mechanical stability. Accordingly, by using a positive electrode active material having a high element ratio of Ni, the resistance increase rate can be suppressed even if the volume changes that accompany charging/discharging are great.

The particle diameter D10 of the composite positive electrode active material particles is preferably 3.0 µm or less, and more preferably 2.5 µm or less. Due thereto, the resistance increase rate in the low SOC region can be suppressed. Note that the low SOC region may mean, for example, a region of an SOC of 30 or less, a region of an SOC of 20 or less, or the like.

The particle diameter D10 is preferably 1.9 µm or more, and more preferably 2.1 µm or more, and even more preferably 2.4 µm or more. Due thereto, the respective coating ratios of the first coating layer and the second coating layer can be made to be sufficient, and high-quality composite positive electrode active material particles can be manufactured easily.

In the composite positive electrode active material particles, the 10% particle diameter D10 in the volume-based cumulative particle size distribution is a value measured by a laser diffraction/scattering method. The laser diffraction/scattering method is the same as that described above.

In order to make the particle diameter D10 of the composite positive electrode active material particles be a specific value, at the time of manufacturing the composite positive electrode active material particles, the particle diameter D10 can be adjusted by using positive electrode active material particles of relatively small particle diameters.

Because the composite positive electrode active material particles that are an embodiment of the present disclosure have the above-described structure, it is difficult for high-resistance layers to form at the interfaces between the positive electrode active material particles and the solid electrolyte, and interfaces that have high chemical stability can be formed, and there is the tendency for it to be difficult for the formed solid electrolyte interfaces to disappear, and the interfaces have high mechanical stability. Accordingly, these are composite positive electrode active material particles that can suppress the resistance increase rate of a battery. For example, by using a positive electrode active material having a high element ratio of Ni, even if the volume changes that accompany charging/discharging are great, the resistance increase rate can be suppressed. Further, the resistance increase rate in the low SOC region can be suppressed. Accordingly, for example, the composite positive electrode active material particles that are an embodiment of the present disclosure are particularly preferable in, for example, secondary batteries requiring a long lifespan of the battery, and in secondary batteries for vehicles and secondary batteries for backup that are thought to work in the low SOC region.

<Method of Manufacturing Composite Positive Electrode Active Material Particles> A method of manufacturing composite positive electrode active material particles that is an embodiment of the present disclosure is a method of manufacturing the composite positive electrode active material particles of the above-described structure that are an embodiment of the present disclosure, and includes a first coating layer forming step and a second coating layer forming step. In the first coating layer forming step, positive electrode active material particles that are coated by a first coating layer are formed by spray drying a blended liquid containing the positive electrode active material particles and a solution that contains the element structuring the first coating layer. In the second coating layer forming step, the positive electrode active material particles that are further coated by a second coating layer are formed by blending together the positive electrode active material particles, which are coated by the first coating layer, and a dispersion liquid, which contains an argyrodite-type sulfide, by using a kneading device. In accordance with the method of manufacturing composite positive electrode active material particles that is an embodiment of the present disclosure, the composite positive electrode active material particles of the above-described structure that are an embodiment of the present disclosure can be manufactured stably.

### (First Coating Layer Forming Step)

In the first coating layer forming step, a blended liquid such as a slurry that contains positive electrode active material particles and a processing liquid, which contains an element that structures the first coating layer, is spray dried. A relatively thin film can be formed uniformly by spray drying.

The solution that contains the element constituting the first coating layer is a solution corresponding to the oxide contained in the first coating layer, that is, a processing liquid containing a precursor of the oxide contained in the first coating layer. Examples of the oxide that the first coating layer contains are the same as those described above. In a case in which the oxide is a phosphorus oxide, the element that structures the first coating layer is P, Li, O, C, and the processing liquid contains a phosphoric acid compound and a solvent. Examples of phosphoric acid compounds are metaphosphate and polyphosphate. The type, the composition ratio and the like of the oxide that structures the first coating layer can be controlled by adjusting the proportion of the element that the processing liquid contains, the proportion of the compound, and the like.

### (Second Coating Layer Forming Step)

In the second coating layer forming step, the positive electrode active material particles coated by the first coating layer, and a dispersion liquid containing an argyrodite-type sulfide, are blended together by using a kneading device. By blending in a moist state in which the viscosity is relatively high by using the dispersion liquid, the appropriate shearing force is generated, and the composition and film thickness of the second coating layer can be formed uniformly.

The dispersion liquid containing an argyrodite-type sulfide contains a solvent and a sulfide solid electrolyte containing an argyrodite-type sulfide. Nonpolar solvents that can be used for hydrophobic particles are preferable as the solvent, and solvents that can provide a hydrophobic environment in order to prevent aggregation of the composite positive electrode active material particles are preferable. For example, 1,2,3,4-tetrahydronaphthalene on which a dehydrating processing has been carried out can be used preferably.

An ultrasonic homogenizer can be preferably used as the kneading device because aggregation of the composite positive electrode active material particles is prevented, and the composition and film thickness of the second coating layer are formed uniformly.

### <Solid-State Battery>

A solid-state battery that is an embodiment of the present disclosure includes a positive electrode containing the composite positive electrode active material particles that are an embodiment of the present disclosure, a negative electrode, and a sulfide solid electrolyte. Because the resistance increase rate of the solid-state battery that is an embodiment of the present disclosure is low, a solid-state battery of a long life can be provided. Further, because the resistance increase rate in the low SOC region can be kept low, the solid-state battery that is an embodiment of the present disclosure is suitable for applications such as secondary batteries requiring a long lifespan of the battery, and secondary batteries for vehicles and secondary batteries for backup that are thought to work in the low SOC region.

The solid-state battery structures an electrode layered structure that includes a positive electrode, a sulfide solid electrolyte layer and a negative electrode in that order.
The positive electrode contains a positive electrode collector and a positive electrode layer, and the negative electrode contains a negative electrode collector and a negative electrode layer. The solid-state battery in the present disclosure is preferably an all-solid-state battery.

### (Collectors)

The types of the collectors of the positive electrode collector and negative electrode collector that structure the electrode layered structure are not particularly limited provided that they are used in solid-state batteries, and can be selected from known collectors. Specific examples of materials of the collectors are metals selected from Ag, Cu, Au, Al, Ni, Fe and Ti, and alloys containing these metals. The thicknesses of the collectors are not particularly limited, and can be selected in consideration of the type, the scale and the like of the battery that is obtained by using the collectors. The total thickness of the collectors may be, for example, 5 µm or more, 10 µm or more, or 20 µm or more. The total thickness of the collectors may be, for example, 120 µm or less, 80 µm or less, or 60 µm or less.

### (Electrode Layers)

Of the positive electrode layer and the negative electrode layer that structure the electrode layered structure, the positive electrode layer contains, as the electrode active material, the composite positive electrode active material particles that are an embodiment of the present disclosure. The composite positive electrode active material particles are the same as those described above. The electrode layers including the positive electrode layer and the negative electrode layer contain at least an electrode active material, and, as needed, may contain a binder, a conductive material, a solid electrolyte and the like.

The electrode active material of the negative electrode layer is not particularly limited provided that it is used in solid-state batteries, and can be selected from known electrode active materials. Specific examples of electrode active materials of the negative electrode layer are carbon materials, active materials containing the element Si, metallic lithium, lithium-containing alloys, and metals or alloys, oxides and transition metal nitrides that can form alloys with lithium.

Examples of carbon materials are graphite materials, amorphous carbon materials, carbon black, and activated carbon. Examples of graphite materials are natural graphite and artificial graphite. Examples of amorphous carbon materials are hard carbon, soft carbon, coke, mesocarbon microbeads (MCMB), and mesophase pitch carbon fibers (MCF). The graphite materials may be coated by a metal or amorphous carbon.

Examples of active materials containing the element Si are elemental silicon, silicon alloys (e.g., alloys of Si and one or more metals selected from the group consisting of Sn, Ti, Fe, Ni, Cu, Co and Al), porous silicon, silicon clathrate compounds, and silicon oxides.

The electrode active material contained in the electrode layer may be a single type only, or may be a combination of two or more types. The form of the electrode active material may be, for example, fiber-shaped, spherical, flake-shaped or the like. The volume average particle diameter of the negative electrode active material among the electrode active materials may be selected from the range of 5 µm - 50 µm for example. The volume average particle diameter of the negative electrode active material is the value (D50) at which the accumulation from the small diameter side is 50% in a volume-based particle size distribution obtained by using a laser diffraction/scattering method.

Specific examples of the binder are polyvinylidene fluoride (PVdF), polyethylene, polypropylene, polyethylene terephthalate, cellulose, nitrocellulose, carboxy methylcellulose, polyethylene oxide, polyepichlorohydrin, polyacrylonitrile, styrene-butadiene rubber (SBR), acrylonitrile-butadiene rubber (NBR), polyacrylate, polymethacrylate, and polytetrafluoroethylene (PTFE).

Examples of the conductive material are carbon materials, metals, electrically-conductive oxides, and electrically-conductive nitrides. Specific examples of carbon materials are graphite, carbon black (acetylene black, thermal black, furnace black), carbon nanotubes (CNT), carbon nanofibers (CNF), and vapor grown carbon fibers (VGCF^{™}). The conductive material may be a single type only, or may be a combination of two or more types.

The solid electrolyte is a sulfide solid electrolyte. The sulfide solid electrolyte may be the argyrodite-type sulfide solid electrolyte used in the second coating layer, or, for example, may be a glass-ceramic-type sulfide solid electrolyte. The sulfide solid electrolyte is as described above. A single type of solid electrolyte may be used, or two or more types may be used in combination.

### (Sulfide Solid Electrolyte Layer)

The sulfide solid electrolyte layer is a layer containing a sulfide solid electrolyte. The thickness of the sulfide solid electrolyte layer is not particularly limited, and may be selected from the range of 1 µm - 30 µm, for example.

The type of the sulfide solid electrolyte contained in the sulfide solid electrolyte layer is not particularly limited, and, for example, may be selected from the above-described sulfide solid electrolytes that may be contained in the electrode layers. In this case, the types of the solid electrolytes that are contained in the respective layers may be the same or may be different. Further, the sulfide solid electrolyte may be the same type as or may be a different type than the sulfide solid electrolyte that the second coating layer of the composite positive electrode active material particles contains.

An example of an all-solid-state battery is illustrated in Fig. 2. As illustrated in Fig. 2, an all-solid-state battery 20 has a layered structure of a positive electrode / a sulfide solid electrolyte layer / a negative electrode. The all-solid-state battery 20 has a negative electrode containing a negative electrode collector 113 and a negative electrode active material layer A, a sulfide solid electrolyte layer B, and a positive electrode containing a positive electrode collector 115 and a positive electrode active material layer C. The sulfide solid electrolyte layer B may be a two-layer structure.

The negative electrode active material layer A contains a negative electrode active material 101, a conduction assistant 105 and a binder 109. The positive electrode active material layer C contains composite positive electrode active material particles 103, a conduction assistant 107 and a binder 111.

The sulfide solid electrolyte layer B contains a sulfide solid electrolyte 102. The solid electrolyte may contain an electrolyte liquid in an amount of less than 10 mass% of the entire amount of the electrolyte. Note that the solid electrolyte may be a composite solid electrolyte containing an inorganic solid electrolyte and a polymer electrolyte.

The all-solid-state battery may be structured such that the layer end surfaces (side surfaces) of the layered structure of the positive electrode / the solid electrolyte layer / the negative electrode are sealed by a resin. The collectors of the electrodes may be structures in which a shock-absorbing layer, an elastic layer or a PTC (Positive Temperature Coefficient) thermistor layer is disposed on the surface of the collector.

### (Exterior Body)

The all-solid-state battery that is an embodiment of the present disclosure may further have an exterior body. The exterior body accommodates at least the above-described electrode stack. Examples of the exterior body are a laminate-type exterior body and a case-type exterior body. A laminate-type exterior body may be formed from a laminated body (a laminate film) that has a metal layer containing a metal such as aluminum and a heat sealing layer containing a resin that melts by being heated.

### (Restraining Member)

The all-solid-state battery that is an embodiment of the present disclosure may further have a restraining member. The restraining member applies restraining pressure in the thickness direction to the above-described electrode stack. The restraining pressure that is applied in the thickness direction of the electrode stack may be, for example, 0.1 MPa or more, 1 MPa or more, or 5 MPa or more. The restraining pressure that is applied in the thickness direction of the electrode stack may be, for example, 100 MPa or less, 50 MPa or less, or 20 MPa or less.

Applications of the all-solid-state battery that is an embodiment of the present disclosure are not particularly limited. Examples of representative applications are use as the power source of a vehicle, an electronic device or a power storage system. The all-solid-state battery may be used as the power source of a moving body other than a vehicle (e.g., a train, ship or airplane), or may be used as the power source for an electric product such as an information processing device. Thereamong, the all-solid-state battery that is an embodiment of the present disclosure is preferably used as the power source of a vehicle, and is preferably used as the power source for driving of a hybrid electric vehicle, a plug-in hybrid electric vehicle, or a battery electric vehicle. Examples of vehicles are electric four-wheel vehicles, electric two-wheel vehicles, gasoline-powered vehicles and diesel-powered vehicles. Examples of electric four-wheel vehicles are battery electric vehicles (BEVs), plug-in hybrid electric vehicles (PHEVs), and hybrid electric vehicles (HEVs). Examples of electric two-wheel vehicles are electric motorcycles and electric assist bicycles.

### EXAMPLES

Embodiments of the present disclosure are described hereinafter with reference to Examples. However, the present disclosure is not limited to these Examples. Details of the materials that are abbreviated are as follows.
NCA: positive electrode active material expressed by the composition formula

   LiNi_{0.81}Co_{0.15}Al_{0.04}O₂
VGCF: vapor grown carbon fibers
SBR: styrene-butadiene rubber

### <Example 1>

### (Preparation of Composite Positive Electrode Active Material Particles)

### (Formation of First Coating Layer)

NCA was readied as the positive electrode active material particles. The particle diameter D50 of the positive electrode active material particles was 5.0 µm. The specific surface area of the positive electrode active material particles was 0.45 m²/g. The processing liquid of the first coating layer was prepared as follows. 1.97 parts by mass of metaphosphate (manufactured by FUJIFILM Wako Pure Chemical Corporation) was dissolved in 191.8 parts by mass of ion exchanged water, and an aqueous solution was obtained. Further, a predetermined amount of boric acid (manufactured by Nacalai Tesque, Inc.) was dissolved in the aqueous solution such that the amount of substance concentration ratio C_{B}/C_{P} became 1.0. Finally, lithium hydroxide monohydrate was added such that the amount of substance concentration ratio C_{Li}/(C_{B}+C_{P}) became 0.9, and the processing liquid of the first coating layer was obtained. Note that C_{B} is the amount of substance of B (boron), C_{P} is the amount of substance of P (phosphorus), and C_{Li} is the amount of substance of Li (lithium).

### (Particle Diameter D50)

The particle diameter distribution of the obtained positive electrode active material particles was measured by using a laser diffraction/scattering type particle size distribution measuring device (SALD-7500nano manufactured by Shimadzu Corporation), and the particle diameter D50 was calculated. The calculated particle diameter D50 of the positive electrode active material particles is listed in Table 1. The measuring method is the same as that described above.

A slurry that was a blended liquid was prepared by dispersing the positive electrode active material particles in the processing liquid of the first coating layer. The concentration of solids of the slurry was 60 mass% as a mass fraction based on the entire slurry. A spray dryer (product name: "Mini Spray Dryer B-290") manufactured by BUCHI Corporation was readied. The slurry was supplied to the spray dryer, and thereby dried by spray drying. The air supplying temperature of the spray dryer was 200°C, and the air supplying flow rate was 0.45 m³/min. The dried positive electrode active material particles having the first coating layer were subjected to a heat treatment in air. The heat treatment was carried out at a treatment temperature of 200°C for a treatment time of 5 hours.

### (Formation of Second Coating Layer)

A dispersion liquid was prepared by dispersing 40.2 parts by mass of a sulfide solid electrolyte in 93.7 parts by mass of a solvent by an ultrasonic homogenizer. The argyrodite-type sulfide expressed by the composition formula LiPS₅Cl (abbreviated as argyrodite in Table 1) was used as the sulfide solid electrolyte, and 1,2,3,4-tetrahydronaphthalene that had been subjected to dehydrating processing in advance was used as the solvent. With respect to 350 parts by mass of the positive electrode active material particles having the first coating layer, 31.2 parts by mass of the dispersion liquid obtained above was supplied to a kneading device (Hivis Mix manufactured by Primix Corporation). Kneading was carried out for 5 minutes at 30 rpm, for 5 minutes at 70 rpm, and for 300 minutes at 100 rpm. Thereafter, by vacuum drying and removing the solvent, positive electrode active material particles coated by the first coating layer and the second coating layer were obtained.

### (Measurement of Composite Positive Electrode Active Material Particles)

### (Particle Diameter D10)

Particle size distribution measurement was carried out on the obtained composite positive electrode active material particles by using the SALD-7500nano manufactured by Shimadzu Corporation. 1.0 g of the composite positive electrode active material particles and 3.0 g of 1,2,3,4-tetrahydronaphthalene as a solvent were collected and were weighed-out in a batch cell. By using an ultrasonic homogenizer, blending/stirring were carried out for 60 seconds, and the particles were dispersed in the solvent. The settings of the refractive index were a real number part of 1.40 and an imaginary number part of 0.02i. The particle diameter distribution was measured, and the particle diameter D10 was calculated. The calculated particle diameter D10 of the composite positive electrode active material particles is listed in Table 1.

By carrying out X-ray diffraction measurement of the composite particles without exposure to air, the diffraction peak deriving from the argyrodite-type structure could be confirmed in addition to the peak deriving from the layer-shaped positive electrode active material. By using the SmartLab II manufactured by Rigaku, measurement was carried out at a measuring angle of 10° - 80°, a Cu bulb tube, a bulb tube voltage of 45 kV, and current of 200 mA. Scanning was carried out at 2°/min at 0.02° increments.

### <Example 2>

Composite positive electrode active material particles were prepared in the same way as in Example 1, except that positive electrode active material particles of a particle diameter D50 of 4.6 µm were used, and, in the formation of the first coating layer, the amount of the metaphosphate that was used was adjusted and the concentration of the processing liquid was adjusted so as to be proportional to the specific surface area of the positive electrode active material that was used. Particle diameter D50 of the positive electrode active material particles and particle diameter D10 of the composite positive electrode active material particles are listed in Table 1. Note that the thicknesses of the first coating layer and the second coating layer were the same as in Example 1.

### <Example 3 - Example 6>

Composite positive electrode active material particles were prepared in the same way as in Example 1, except that positive electrode active material particles of a particle diameter D50 of 3.0 µm were used, and, in the formation of the first coating layer, the amount of the metaphosphate that was used was adjusted and the concentration of the processing liquid was adjusted so as to be proportional to the specific surface area of the positive electrode active material that was used. Particle diameter D50 of the positive electrode active material particles and particle diameter D10 of the composite positive electrode active material particles are listed in Table 1. Note that the thicknesses of the first coating layer and the second coating layer were the same as in Example 1.

### <Comparative Example 1 - Comparative Example 4>

Composite positive electrode active material particles, which had the first coating layer but did not have the second coating layer, were prepared in the same way as in Example 1, except that positive electrode active material particles of the particle diameters D50 listed in Table 1 were used, and the amount of the metaphosphate that was used was adjusted and the concentration of the processing liquid was adjusted so as to be proportional to the specific surface area of the positive electrode active material that was used, and a second coating layer was not formed. Particle diameter D50 of the positive electrode active material particles and particle diameter D10 of the composite positive electrode active material particles are listed in Table 1.

### <Comparative Example 5 - Comparative Example 6>

Composite positive electrode active material particles were prepared in the same way as in Example 1, except that a layer containing a glass ceramic was formed as the second coating layer.
The second coating layer was formed as follows. Namely, the second coating layer was formed in the same way as in Example 1, except that a glass ceramic represented by composition formula 10LiI-15LiBr-75Li₃PS₄ was used as the sulfide solid electrolyte.
The particle diameter D50 of the positive electrode active material particles and the particle diameter D10 of the composite positive electrode active material particles are listed in Table 1.

### <Evaluation>

### (Manufacturing of All-Solid-State Battery)

The following materials were readied.

| | |
|---|---|
| sulfide solid electrolyte: | 10LiI-15LiBr-75Li₃PS₄ |
| conductive material: | VGCF |
| binder: | SBR |
| dispersion medium: | heptane |
| positive electrode collector: | Al foil |
| negative electrode collector: | Ni foil |

A positive electrode slurry was prepared by blending together the composite positive electrode active material particles obtained in Example 1, a post-added sulfide solid electrolyte, a conductive material, a binder and a dispersion medium. The blending ratio (volume ratio) was composite positive electrode active material particles containing the first coating layer / (total of second coating layer and sulfide solid electrolyte derived from post-addition) = 75/25. The blended amount of the conductive material was 3 parts by mass with respect to 100 parts by mass of the composite positive electrode active material particles. The blended amount of the binder was 3 parts by mass with respect to 100 parts by mass of the composite positive electrode active material particles. The positive electrode slurry was stirred sufficiently using an ultrasonic homogenizer. A positive electrode layer was formed by coating the positive electrode slurry on the surface of a positive electrode collector. The positive electrode layer was dried for 30 minutes at 100°C using a hot plate. A raw sheet was thereby manufactured. A disc-shaped positive electrode layer was cut out from the raw sheet. The surface area of the positive electrode layer was 1 cm².

A negative electrode layer and sulfide solid electrolyte layer were readied. The negative electrode layer was graphite. Sulfide solid electrolytes of the same type were used in the positive electrode layer, the sulfide solid electrolyte layer and the negative electrode layer. An electrode layered structure was formed by layering the positive electrode layer, the sulfide solid electrolyte layer and the negative electrode layer in that order within a tubular jig. The electrode layered structure was pressed. By connecting terminals to the pressed electrode layered structure, a cell for evaluation (all-solid-state battery) was formed.

The SOC of the cell for evaluation was adjusted to 20%. Discharging of the cell for evaluation was carried out for 5 seconds at a current rate of 2.5C. The battery resistance (initial resistance) was determined from the following formula. The initial resistance is listed in Table 1.$R = ΔV / I$
- R:: battery resistance
- ΔV:: amount of drop in voltage after discharging for 5 seconds
- I:: discharge current

As an endurance test, after the initial resistance was measured, a charging/discharging cycle was repeated at a current rate of 1.0C in a temperature environment of 60°C. After 100 cycles, the battery resistance (post-endurance resistance) was again measured under the same conditions as above. The resistance increase rate was determined by the following formula. The resistance increase rate is expressed as a percentage (%). The post-endurance resistance and the resistance increase rate are listed in Table 1.$ΔR = \left({R}_{1}/{R}_{0}\right) \times 100$
- ΔR:: resistance increase rate
- R₀:: initial resistance
- R₁:: post-endurance resistance

Except that the respective composite positive electrode active material particles obtained in Example 2 - Example 6 and Comparative Example 1 - Comparative Example 6 were used, the initial resistance at an SOC of 20%, and the post-endurance resistance and the resistance increase rate after the endurance test, were measured in the same way as described above, and are listed in Table 1.

**[Table 1]**

| | second coating layer | post-added solid electrolyte | particle diameter D50 (µm) of positive electrode active material particles | particle diameter D10 (µm) of composite positive electrode active material particles | SOC 20 | | |
|---|---|---|---|---|---|---|---|
| | | | | | initial resistance (Ω) | post-endurance resistance (Ω) | resistance increase rate (%) |
| comp. ex. 1 | none | argyrodite | 5.0 | 3.5 | 35.6 | 138.7 | 390 |
| comp. ex. 2 | none | argyrodite | 4.5 | 3.0 | 28.0 | 101.3 | 362 |
| comp. ex. 3 | none | argyrodite | 4.0 | 2.7 | 25.4 | 73.5 | 289 |
| comp. ex. 4 | none | argyrodite | 3.0 | 2.4 | 18.5 | 42.7 | 231 |
| ex. 1 | argyrodite | argyrodite | 4.5 | 3.1 | 23.4 | 53.2 | 227 |
| ex. 2 | argyrodite | argyrodite | 4.6 | 3.3 | 25.2 | 56.8 | 225 |
| ex. 3 | argyrodite | argyrodite | 3.0 | 2.4 | 14.0 | 19.9 | 142 |
| ex. 4 | argyrodite | glass ceramic | 3.0 | 2.5 | 14.6 | 22.6 | 155 |
| ex. 5 | argyrodite | argyrodite | 3.0 | 2.1 | 16.5 | 27.3 | 166 |
| ex. 6 | argyrodite | glass ceramic | 3.0 | 1.9 | 17.7 | 27.2 | 154 |
| comp. ex. 5 | glass ceramic | argyrodite | 4.5 | 2.9 | 19.0 | 49.6 | 261 |
| comp. ex. 6 | glass ceramic | argyrodite | 4.5 | 2.9 | 18.9 | 51.8 | 274 |

## Claims

1. Composite positive electrode active material particles, comprising:
positive electrode active material particles;
a first coating layer coating at least a part of the positive electrode active material particles; and
a second coating layer coating at least a part of the first coating layer, wherein:
the first coating layer contains an oxide,
the second coating layer contains a sulfide solid electrolyte,
the sulfide solid electrolyte contains an argyrodite-type sulfide, and
a 10% particle diameter D10 in a volume-based cumulative particle size distribution is 3.3 µm or less.

2. The composite positive electrode active material particles of claim 1, wherein the positive electrode active material particles contain Ni in a proportion of 80 mol% or more.

3. The composite positive electrode active material particles of claim 1, wherein the first coating layer is configured by an oxide.

4. The composite positive electrode active material particles of claim 1, wherein the first coating layer is configured by a phosphorus oxide.

5. The composite positive electrode active material particles of claim 1, wherein the 10% particle diameter D10 in a volume-based cumulative particle size distribution is 2.5 µm or less.

6. The composite positive electrode active material particles of claim 1, wherein the 10% particle diameter D10 in a volume-based cumulative particle size distribution is 1.9 µm or more.

7. A method of manufacturing the composite positive electrode active material particles of any one of claim 1 through claim 6, the method comprising:
a step of forming the positive electrode active material particles on which the first coating layer is coated by spraying and drying a blended liquid that contains the positive electrode active material particles and a solution containing an element that configures the first coating layer; and
a step of forming the positive electrode active material particles on which the second coating layer is further coated by blending together the positive electrode active material particles, on which the first coating layer has been coated, and a dispersion liquid, which contains the argyrodite-type sulfide, using a kneading device.

8. A solid-state battery, comprising:
a positive electrode containing the composite positive electrode active material particles of any one of claim 1 through claim 6;
a negative electrode; and
a sulfide solid electrolyte.

9. The solid-state battery of claim 8, wherein the sulfide solid electrolyte contains an argyrodite-type sulfide.
